# EUROPÄISCHE PATENTSCHRIFT

(11) **EP 0 399 585 B1**
(45) Veröffentlichungstag und Bekanntmachung des Hinweises auf die Patenterteilung: **04.08.1993**
(21) Anmeldenummer: 90201101.4
(22) Anmeldetag: 02.05.1990
(51) Int. Cl.: C04B 18/02, A62D 3/00, F27B 21/06

(54) **Verfahren zur Herstellung von festen Agglomeraten aus stichfesten mineralischen Schlämmen**
Process for the manufature of solid aggregates from compact mineral slurries
Procédé pour la fabrication d'agglomérés solides à partir de boues minérales consistantes

(30) Priorität: 25.05.1989 DE 3917037
(43) Veröffentlichungstag der Anmeldung: 28.11.1990
(73) Patentinhaber: METALLGESELLSCHAFT Aktiengesellschaft, 60015 Frankfurt (DE)
(72) Erfinder: Dadazynski, Rolf-Peter, D-6395 Weilrod 1 (DE); Meiler, Heinrich, D-6238 Hofheim 7 (DE); Hankel, Dirk, Dr., D-6052 Mühlheim 3 (DE)

(56) Entgegenhaltungen:
- EP-A- 0 334 413
- BE-A- 503 380
- DE-A- 3 534 139
- DE-A- 3 602 562
- FR-A- 1 048 766
- GB-A- 404 863
- GB-A- 709 845

## Beschreibung

Die Erfindung betrifft ein Verfahren zur Herstellung von festen Agglomeraten aus stichfesten mineralischen Schlämmen, die organische Bestandteile bis zu etwa 10 % enthalten.

Solche Schlämme fallen insbesondere beim Ausbaggern von Häfen oder Flüssen an und werden auch als Schlick bezeichnet. Ihre Trockensubstanz besteht hauptsächlich aus mineralischen Stoffen und bis zu etwa 10 % aus organischen Stoffen, bezogen auf trockene Substanz. Sie enthalten Schwermetalle wie Blei, Zink, Kadmium, Chrom usw. Ihr Wassergehalt liegt im allgemeinen über 60 %. Durch Entwässern kann der Wassergehalt zwar gesenkt werden, liegt aber immer noch sehr hoch. Diese Schlämme ergeben wegen ihres hohen Wassergehaltes und ihres Gehaltes an Schwermetallen und organischen Bestandteilen beträchtliche Deponie-Probleme.

Aus der DE-OS 35 34 139 ist ein Verfahren zur Herstellung von festen Agglomeraten aus solchen Schlämmen bekannt, wobei der Schlamm mit feinkörnigem, geklinkertem Rückgut gemischt und mit einem Wassergehalt von 60 bis 30 % durch Pressen in Formlinge geformt wird. Die feuchten Formlinge werden auf einen Wanderrost chargiert und mit heißen sauerstoffhaltigen Gasen von 500 bis 900°C behandelt, bis die Formlinge etwa die Temperatur der heißen sauerstoffhaltigen Gase aufweisen, jedoch eine Temperatur von 950°C nicht überschreiten. Anschließend werden die Formlinge mit heißen sauerstoffhaltigen Gasen von 1100 bis 1160°C geklinkert und danach gekühlt. Nach dem Abwurf vom Wanderrost wird das feinkörnig anfallende geklinkerte Material als Rückgut abgesiebt und zurückgeführt. Falls diese Menge nicht ausreicht, wird grobkörniges geklinkertes Material auf Rückgutfeinheit zerkleinert. Die Längsachse der Formlinge ist größer als ihre Querachse.

Aus der DE-OS 36 02 562 ist es bekannt, den stichfesten Schlamm mit einem Wassergehalt von 40 bis 65 % mit trockenem Rückgut in einem solchen Verhältnis zu mischen, daß der Wassergehalt in der Mischung 20 bis 30 % beträgt, und daß der Gehalt an organischen Bestandteilen bei vollständiger Verbrennung in der Produkt-Schicht nicht zur Überschreitung der gewünschten Klinkertemperatur führt. Die Mischung wird pelletiert, und die Grünpellets werden auf einen Wanderrost chargiert. Zunächst werden heiße sauerstoffhaltige Gase von 500 bis 900°C durch das Pellet-Bett geleitet, bis mindestens die oberste Schicht des Pellet-Bettes auf die Temperatur der heißen Gase aufgeheizt ist, anschließend werden heiße sauerstoffhaltige Gase von 1100 bis 1160°C durch das Bett geleitet, bis die obere Schicht des Bettes geklinkert ist, und danach werden kalte Gase durch das Bett geleitet. Nach dem Abwurf vom Wanderrost wird die geklinkerte Produkt-Schicht von der darunterliegenden Schicht getrennt. Das Material der Unterschicht wird auf die für das Rückgut erforderliche Korngröße zerkleinert und als Rückgut zurückgeführt.

In der Patentanmeldung P 38 09 358.8 (EP-A- 334413) werden aus der Mischung von stichfestem Schlamm und trockenem Rückgut Pellets mit kleinerem Durchmesser und Pellets mit größerem Durchmesser hergestellt. Die Pellets mit kleinerem Durchmesser werden als untere Schicht und die Pellets mit größerem Durchmesser als obere Schicht auf den Wanderrost chargiert. Nach Durchführung der vorstehend beschriebenen thermischen Behandlung werden die Pellets mit größerem Durchmesser abgesiebt und als Produktion abgeführt und die Pellets mit kleinerem Durchmesser auf Rückgut-Korngröße zerkleinert und als Rückgut zurückgeführt. Nach diesem Verfahren ist eine saubere Trennung von Oberschicht und Unterschicht durch einfaches Sieben möglich. Jedoch müssen Grünpellet-Fraktionen abgesiebt und zurückgeführt werden, deren Korngröße nicht der für die Ober- und Unterschicht gewünschten Korngröße entspricht. Dadurch können Schwankungen in der Nässe der Aufgabemischung für die Pelletieraggregate auftreten.

Der Erfindung liegt die Aufgabe zugrunde, die Schwankungen im Nässegehalt der Mischung vor der Formgebung zu vermeiden, und trotzdem die gute Trennbarkeit der oberen Schicht von der unteren Schicht nach dem Abwurf vom Wanderrost aufrecht zu erhalten.

Die Lösung der Aufgabe erfolgt erfindungsgemäß dadurch, daß
a) der stichfeste Schlamm mit trockenem Rückgut in einem solchen Verhältnis gemischt wird, daß der Wassergehalt der Mischung einen für eine Herstellung von Formlingen günstigen Wert erreicht und daß der Gehalt an organischen Bestandteilen in den Formlingen bei vollständiger Verbrennung in der Produkt-Schicht auf einem Wanderrost nicht zur Überschreitung der gewünschten Klinkertemperatur führt,
b) aus der Mischung Preßlinge mit kleinerer Stückgröße und Formlinge mit größerer Stückgröße hergestellt werden,
c) die Preßlinge mit kleinerer Stückgröße als untere Schicht und die Formlinge mit größerer Stückgröße als obere Schicht auf den Wanderrost chargiert werden,
d) durch das Bett heiße sauerstoffhaltige Gase von 500 bis 900°C geleitet werden bis mindestens die oberste Schicht des Bettes auf die Temperatur der heißen Gase aufgeheizt ist,
e) anschließend heiße sauerstoffhaltige Gase von 1100 bis 1160°C durch das Bett geleitet werden bis die obere Schicht geklinkert ist,
f) danach kalte Gase durch das Bett geleitet werden,
g) nach dem Abwurf vom Wanderrost die geklinkerten Formlinge mit größerer Stückgröße abgesiebt und als Produktion abgeführt werden und die Preßlinge mit kleinerer Stückgröße auf Rückgut-Korngröße zerkleinert und als Rückgut zurückgeführt werden.

Der Gehalt an organischen Bestandteilen ist auf trockenen Schlamm bezogen. Die Herstellung der Preßlinge erfolgt vorzugsweise in Strangpressen, wobei die Länge der Preßlinge durch Abschneiden eingestellt wird. Bei runden Strängen ist die Dicke der Preßlinge gleich dem Durchmesser der Stränge. Die Herstellung der Preßlinge kann jedoch auch in Walzenpressen oder dergleichen erfolgen. Die Stückgrößen werden so eingestellt, daß bei der Absiebung eine einwandfreie Trennung von Oberschicht und Unterschicht erfolgen kann. Die Formlinge mit größerer Stückgröße können durch Pelletierung hergestellt werden. Bei der Herstellung von Pellets mit größerem Durchmesser fallen geringere Mengen an Pellets an, deren Durchmesser oberhalb oder unterhalb des gewünschten Bereiches liegt, verglichen mit der Herstellung von Pellets mit kleinerem Durchmesser. Der stichfeste Schlamm liegt im allgemeinen mit einem Wassergehalt von 40 bis 65 % vor. Er wird mit trockenem Rückgut in einem solchen Verhältnis gemischt, daß der Wassergehalt in der Mischung etwa 20 bis 30 % beträgt, und daß der Gehalt an organischen Bestandteilen bei vollständiger Verbrennung in der Produkt-Schicht, d.h. der abgesiebten gröberen Schicht, nicht zur Überschreitung der gewünschten Klinkertemperatur führt. Die Herstellung der Preßlinge kann - verglichen mit der Herstellung von Pellets - in einem breiteren Feuchtigkeitsbereich der Mischung erfolgen, ohne daß die Qualität der erzeugten Preßlinge unzulässig verschlechtert wird. Das Pressen kann ohne Zugabe von Wasser erfolgen. Wenn zur Einstellung des gewünschten Wassergehaltes in der Mischung eine solche Menge an trockenem Rückgut zugesetzt werden muß, daß der Gehalt an brennbaren organischen Bestandteilen in der Mischung zu klein wird, kann der Mischung Brennstoff zugesetzt werden. Wenn im Hinblick auf den Gehalt an organischen Bestandteilen in der Mischung so viel Rückgut zugesetzt werden muß, daß der Wassergehalt der Mischung zu niedrig wird, kann der Mischung Wasser zugesetzt werden. Der maximal zulässige Gehalt an organischen Bestandteilen richtet sich nach dem Brennwert der organischen Bestandteile und der dadurch bei ihrer Verbrennung in der später als geklinkertes Produkt abgeführten oberen Schicht entstehenden Verbrennungstemperatur. In dieser Schicht darf die maximal gewünschte Klinkertemperatur nicht überschritten werden. Die Menge des Rückgutes beträgt je nach Wassergehalt und/oder Gehalt an organischen Bestandteilen etwa 100 bis 350 %, bezogen auf trockenen Schlamm. Die Höhe des Bettes auf dem Wanderrost kann 30 bis 40 cm betragen. Als unterste Schicht kann Rostbelag aus geklinkerten Formlingen aufgegeben werden. Die Durchleitung der heißen Gase von 500 bis 900°C erfolgt von oben nach unten so lange, bis mindestens die oberste Schicht auf die Gastemperatur aufgeheizt ist. Die Temperatur der heißen Gase wird vorzugsweise so gewählt, daß in Abhängigkeit von der Verbrennungswärme der organischen Bestandteile in der oberen Schicht die Temperatur in den Formlingen 950°C nicht überschreitet. Das Durchsaugen der Gase durch das Bett erfolgt mit einem Unterdruck von etwa 8 bis 20 mbar. Anschließend werden heiße sauerstoffhaltige Gase von 1100 bis 1160°C so lange durch das Bett geleitet, bis die obere Schicht aus gröberen Formlingen geklinkert ist. Das Durchsaugen dieser Gase erfolgt mit einem Unterdruck von etwa 15 bis 40 mbar. Die Temperatur der heißen Gase und die Dauer der Behandlung werden so eingestellt, daß eine Keramisierung der Formlinge in der oberen Schicht eintritt, eine Verschlackung von niedrig schmelzenden Bestandteilen und eine Reduktion von Metallverbindungen jedoch möglichst vermieden wird. Die meisten Schwermetalle werden vollständig oder zu über 90 % eingebunden. Der Rest kann mit relativ geringem Aufwand aus den Abgasen abgeschieden werden. Die organischen Bestandteile in der oberen Schicht werden praktisch vollständig entfernt. Die obere Schicht ist geklinkert wenn die unteren Formlinge dieser Schicht eine Temperatur von etwa 1100 bis 1150°C aufweisen. Die anschließende Kühlung des Bettes erfolgt im allgemeinen mittels Luft. Nach der Absiebung werden die Preßlinge mit kleinerer Stückgröße auf die für das Rückgut erforderliche Korngröße zerkleinert. Die Zerkleinerung erfolgt auf eine Rückgut-Korngröße unter 1 mm. Wenn der Wanderrost mit Rostbelag betrieben wird, wird der Rostbelag vor der Zerkleinerung des Rückgutes abgesiebt. Falls die anfallende Rückgutmenge nicht ausreicht, wird ein entsprechender Teil von geklinkertem Material zusätzlich zerkleinert. Das Verhältnis von Schichthöhe der Formlinge mit größerer Stückgröße zu Schichthöhe der Preßlinge mit kleinerer Stückgröße auf dem Wanderrost wird bestimmt durch die erforderliche Menge an Rückgut, die von dem Gehalt des Schlammes an Wasser und organischen Bestandteilen abhängig ist. Die Schichthöhe der Formlinge mit größerer Stückgröße, d.h. der Produkt-Formlinge, wird im Bereich von etwa 7 bis 15 cm gehalten. Der Abstand zwischen den beiden Stückgrößen wird so gewählt, daß eine einwandfreie Absiebung möglich ist. Vor der Behandlung der Beschickung mit den heißen sauerstoffhaltigen Gasen von 500 bis 900°C erfolgt vorzugsweise eine Trocknung der Formlinge mit warmen Gasen. Die Trocknung erfolgt vorzugsweise zunächst als Drucktrocknung, wobei die warmen Gase von unten nach oben durch das Beschickungsbett gedrückt werden und anschließend als Saugtrocknung, wobei die warmen Gase von oben nach unten durch das Beschickungsbett gesaugt werden.

Eine vorzugsweise Ausgestaltung besteht darin, daß die Formlinge mit größerer Stückgröße durch Pressen hergestellt werden. In diesem Fall fällt auch bei der Herstellung der Formlinge mit größerer Stückgröße kein Unter- oder Überkorn an, das in die Mischung zurückgeführt werden muß.

Eine vorzugsweise Ausgestaltung besteht darin, daß das Verhältnis von Länge zu Dicke der Preßlinge etwa 1:1 beträgt. Bei Preßlingen aus runden Strängen ist der Durchmesser gleich der Dicke, und das Verhältnis von Durchmesser zur Länge der Stränge soll etwa 1:1 betragen. Bei Preßlingen, die eine eckige Form aufweisen, genügt für eine gute Absiebung bereits, wenn das Verhältnis von Länge zu Breite etwa 1:1 ist. Jedoch ist es für eine gute Kalzinierung günstig, wenn alle Kanten etwa gleiche Länge haben. Bei Strangpreßlingen ist es günstiger, wenn die Preßlinge in einem Bereich von Länge zu Durchmesser von z.B. 1,3 bis 0,8 liegen als wenn sie im Bereich von 1 bis 0,6 oder 1,6 bis 1 liegen.

Eine vorzugsweise Ausgestaltung besteht darin, daß die Preßlinge einer Nachroll-Behandlung unterworfen werden. Durch das Nachrollen werden die Preßlinge abgerundet. Dadurch wird der Abrieb an den Kanten verringert und das Größenverhältnis der Preßlinge vereinheitlicht.

Eine vorzugsweise Ausgestaltung besteht darin, daß die Preßlinge mit kleinerer Stückgröße in einer Stückgröße von 7 bis 11 mm und die Preßlinge mit größerer Stückgröße in einer Stückgröße von 15 bis 20 mm hergestellt werden. Mit diesen Stückgrößen werden gute Kalzinationsergebnisse erzielt und die Differenz zwischen den Stückgrößen ermöglicht eine gute Trennung von Ober- und Unterschicht. Vorzugsweise erfolgt die Herstellung der Preßlinge zunächst im jeweils unteren Stückgrößenbereich. Die Preßwerkzeuge müssen dann erst ausgewechselt werden, wenn ihre Öffnungen durch Verschleiß den oberen Bereich der Stückgrößen erreicht haben. Die Länge der Preßlinge wird dann vorteilhafterweise in der Mitte gewählt, wenn sie konstant gehalten wird. Noch günstiger ist es, wenn die Länge dem sich ändernden Durchmesses angepaßt wird.

Eine vorzugsweise Ausgestaltung besteht darin, daß die vom Wanderrost abgeworfenen und abgesiebten Preßlinge mit kleinerer Stückgröße auf eine Rückgut-Korngröße unter 0,5 mm zerkleinert werden. Diese Rückgut-Korngröße ergibt besonders gute Bedingungen für die Herstellung der Formlinge und damit für das Gesamtverfahren.

Eine vorzugsweise Ausgestaltung besteht darin, daß eine Fraktion mit einer Korngröße von 8-12 mm abgesiebt und als Rostbelag zurückgeführt wird. Die Verwendung von Rostbelag dieser Korngröße ergibt besonders gute Betriebsergebnisse.

Die Erfindung wird anhand eines Beispieles näher erläutert.

### Beispiel

Das Beispiel wurde anhand der Ergebnisse von Pfannenversuchen für einen Wanderrost berechnet.

22,7 t/h Hafenschlick mit einem Wassergehalt von 43,8 % werden mit 25,5 t/h Rückgut in einem Mischer gemischt. Zur Erzielung eines für die Herstellung der Preßlinge optimalen Nässegehaltes wird der Nässegehalt der Mischung durch Wasserzugabe von 20,6% auf 25,5% erhöht. In einer ersten Strangpresse werden kleinere Preßlinge mit einem Durchmesser von 10 mm und einer Länge von 10 mm hergestellt. In einer zweiten Presse werden größere Preßlinge mit einem Durchmesser von 15 mm und einer Länge von 15 mm hergestellt. Es ist keine Rückführung von Ober- oder Unterkorn bei der Herstellung der Preßlinge erforderlich. Auf einen Wanderrost werden zunächst 5,9 t/h Rostbelag mit einer Korngröße von 8-12 mm in einer Schichtdicke von 5 cm aufgegeben. Auf den Rostbelag werden 36,4 t/h kleinere Preßlinge mittels eines Rollenrostes in einer Schichtdicke von 24 cm aufgegeben. Auf diese Schicht werden 15 t/h größere Preßlinge in einer Schichtdicke von 8 cm mittels eines Rollenrostes chargiert. Das durch die Rollenroste fallende Material wird wieder in den Mischer zurückgeführt. Die Trocknung der Beschickung erfolgt zunächst für 2 min. in einer Drucktrocknungsstufe und dann für weitere 2 min. in einer Saugtrocknungsstufe. Anschließend werden die größeren Preßlinge der oberen Schicht innerhalb von 7 min. auf 900°C aufgeheizt und auf dieser Temperatur gehalten. Danach werden die größeren Preßlinge der oberen Schicht innerhalb von 9 min. auf 1150°C aufgeheizt und auf dieser Temperatur gehalten. Die anschließende Kühlezeit beträgt 9 min. Die Kühlung erfolgt mittels Kühlluft, die von unten nach oben durch das Beschickungsbett gedrückt wird. Die erwärmte Kühlluft aus dem letzten Teil der Kühlzone wird zum Teil in der Drucktrocknungszone von unten nach oben durch die Beschickung gedrückt und dann mit dem restlichen Teil als Abluft abgeführt. Die heiße Kühlluft aus dem ersten Teil der Kühlzone wird in die Klinkerzone und die zweite Aufheizzone geleitet. Ein Teil des Abgases aus der Klinkerzone und aus dem letzten Teil der zweiten Aufheizzone wird in der Saugtrocknungszone und im ersten Teil der ersten Aufheizzone von oben nach unten durch die Beschickung gesaugt. Das Abgas aus der Saugtrocknungszone und der ersten Aufheizzone sowie die nicht rückgeführten Teile des Abgases aus der zweiten Aufheizzone und der Klinkerzone werden zu einer Nachverbrennung geleitet. Der Abwurf vom Wanderrost beträgt 41,9 t/h und wird in einer ersten Absiebung bei einer Siebmaschenweite von 12 mm abgesiebt. 10,5 t/h Preßlinge mit einer Korngröße über 12 mm werden als Produktion abgeführt. Das Material unter 12 mm wird in einer zweiten Absiebung bei einer Sieböffnung von 8 mm abgesiebt. Das Material mit einer Korngröße unter 8 mm wird als Rückgut in die Rückgutmühle geleitet. Das Material mit einer Korngröße von 8-12 mm wird als Rostbelag zurückgeführt und eventueller Überschuß wird als Rückgut in die Rückgutmühle geleitet. In der Rückgutmühle erfolgt eine Zerkleinerung auf eine Korngröße unter 0,5 mm.

Die Vorteile der Erfindung bestehen darin, daß ein sehr enger Stückgrößenbereich für die beiden Stückgrößen eingehalten werden kann, der Feuchtigkeitsgehalt der Mischung einerseits sehr konstant gehalten werden kann, andererseits ein breiterer Feuchtigkeitsbereich für die Herstellung guter Preßlinge zulässig ist, und eine sehr gute Trennung von Ober- und Unterschicht durch Sieben möglich ist.

## Patentansprüche

1. Verfahren zur Herstellung von festen Agglomeraten aus stichfesten mineralischen Schlämmen, die organische Bestandteie bis zu etwa 10 % enthalten, dadurch gekennzeichnet, daß
a) der stichfeste Schlamm mit trockenem Rückgut in einem solchen Verhältnis gemischt wird, daß der Wassergehalt der Mischung einen für eine Herstellung von Formlingen günstigen Wert erreicht und daß der Gehalt an organischen Bestandteilen in den Formlingen bei vollständiger Verbrennung in der Produkt-Schicht auf einem Wanderrost nicht zur Überschreitung der gewünschten Klinkertemperatur führt,
b) aus der Mischung Preßlinge mit kleinerer Stückgröße und Formlinge mit größerer Stückgröße hergestellt werden,
c) die Preßlinge mit kleinerer Stückgröße als untere Schicht und die Formlinge mit größerer Stückgröße als obere Schicht auf den Wanderrost chargiert werden,
d) durch das Bett heiße sauerstoffhaltige Gase von 500 bis 900°C geleitet werden bis mindestens die oberste Schicht des Bettes auf die Temperatur der heißen Gase aufgeheizt ist,
e) anschließend heiße sauerstoffhaltige Gase von 1100 bis 1160°C durch das Bett geleitet werden bis die obere Schicht geklinkert ist,
f) danach kalte Gase durch das Bett geleitet werden,
g) nach dem Abwurf vom Wanderrost die geklinkerten Formlinge mit größerer Stückgröße abgesiebt und als Produktion abgeführt werden und die Preßlinge mit kleinerer Stückgröße auf Rückgut-Korngröße zerkleinert und als Rückgut zurückgeführt werden.

2. Verfahren nach Anspruch 1, dadurch gekennzeichnet, daß die Formlinge mit größerer Stückgröße durch Pressen hergestellt werden.

3. Verfahren nach Anspruch 1 oder 2, dadurch gekennzeichnet, daß das Verhältnis von Länge zu Dicke der Preßlinge etwa 1:1 beträgt.

4. Verfahren nach einem der Ansprüche 1 bis 3, dadurch gekennzeichnet, daß die Preßlinge einer Nachroll-Behandlung unterworfen werden.

5. Verfahren nach einem der Ansprüche 1 bis 4, dadurch gekennzeichnet, daß die Preßlinge mit kleinerer Stückgröße in einer Stückgröße von 7 bis 11 mm und die Preßlinge mit größerer Stückgröße in einer Stückgröße von 15 bis 20 mm hergestellt werden.

6. Verfahren nach einem der Ansprüche 1 bis 5, dadurch gekennzeichnet, daß die vom Wanderrost abgeworfenen und abgesiebten Preßlinge mit kleinerer Stückgröße auf eine Rückgut-Korngröße unter 0,5 mm zerkleinert werden.

7. Verfahren nach einem der Ansprüche 1 bis 6, dadurch gekennzeichnet, daß eine Fraktion mit einer Korngröße von 8-12 mm abgesiebt und als Rostbelag zurückgeführt wird.

## Claims

1. A process of making strong agglomerates from compact mineral sludges, which contain organic constituents in an amount of up to about 10%, characterized in that
a) the compact sludge is mixed with dry recycled matter in such a ratio that the water content of the mixture has a value which is desirable for a making of shaped bodies and that the content of organic constituents in the shaped bodies is such that a complete combustion in the product layer on a travelling grate does not result in a temperature rise above the desired clinker temperature,
b) compacts having a relatively small lump size and shaped bodies having a relatively large lump size are made from the mixture,
c) the compacts having a relatively small lump size are charged as a lower layer and the shaped bodies having a relatively large lump size are charged as an upper layer on the travelling grate,
d) hot oxygen-containing gases at 500 to 900°C are passed through the bed until at least the uppermost layer of the bed is heated to the temperature of the hot gases,
e) thereafter the hot oxygen-containing gases at 1100 to 1160°C are passed through the bed until the upper layer has been clinkered,
f) cold gases are subsequently passed through the bed,
g) after the discharge from the travelling grate the clinkered shaped bodies having a relatively large lump size are sieved off and delivered as a product and the compacts having a relatively small lump size are disintegrated to a recyclable particle size and are recycled.

2. A process according to claim 1, characterized in that the shaped bodies having a relatively large lump size are made by pressing.

3. A process according to claim 1 or 2, characterized in that the ratio of the length to the thickness of the compacts is about 1:1.

4. A process according to any of claims 1 to 3, characterized in that the compacts are subjected to a tumbling aftertreatment.

5. A process according to any of claims 1 to 4, characterized in that compacts having a relatively small lump size are made in a lump size of 1 toll mm and compacts having a relatively large lump size are made in a lump size of 15 to 20 mm.

6. A process according to any of claims 1 to 5, characterized in that the compacts which have a relatively small lump size and which have been discharged from the travelling grate and have been sieved off are disintegrated to a recyclable particle size below 0,5 mm.

7. A process according to any of claims 1 to 6, characterized in that a fraction having a particle size of 8 to 12 mm is sieved off and is recycled to form grate-protecting covering layer.

## Revendications

1. Procédé de production d'agglomérés solides en utilisant des boues minérales consistantes contenant jusqu'à 10% de constituants organiques, caractérisé en ce que
a)les boues consistantes sont mélangées au produit de récupération sec avec un rapport tel que la teneur en eau du mélange atteint une valeur favorable pour la préparation de briquette et que la teneur en constituants organiques dans les briquettes ne donne pas lieu à un dépassement de la température de cuisson souhaitée au moment de leur combustion complète dans la couche de produit sur une grille mobile,
b) le mélange est utilisé pour préparer des pièces comprimées de petites dimensions et des briquettes de plus grandes dimensions,
c) les pièces comprimées de petites dimensions sont placées sur la grille mobile pour servir de couche inférieure et les briquettes de plus grandes dimensions y sont placées pour former la couche supérieure,
d) on fait passer à travers le lit des gaz chauds entre 500 et 900°C qui contiennent de l'oxygène jusqu'à ce qu'au moins la partie supérieure du lit soit chauffée à la température des gaz chauds,
e) des gaz chauds contenant de l'oxygène et à une température de 1100 à 1160°C sont ensuite introduits à travers le lit jusqu'à ce que la couche supérieure soit cuite.
f) on fait ensuite passer des gaz froids à travers le lit,
g) après déchargement de la grille mobile, les briquettes cuites de grandes dimensions sont séparées par tamisage et sont évacuées comme produit, tandis que les pièces comprimées de plus petites dimensions sont fragmentées à la granulométrie du produit récupéré et sont recyclées comme produit récupéré.

2. Procédé selon la revendication 1,caractérisé en ce que les briquettes de plus grandes dimensions sont préparées par compression.

3. Procédé selon la revendication 1 ou 2, caractérisé en ce que le rapport de la longueur à l'épaisseur des pièces comprimées est égal à environ 1:1.

4. Procédé selon l'une des revendications 1 à 3, caractérisé en ce que les pièces comprimées sont soumises à un traitement ultérieur de roulement au tambour.

5. Procédé selon l'une des revendications 1 à 4, caractérisé en ce que les pièces comprimées de plus petites dimensions sont préparées avec une granulométrie de 7 à 11 mm et que les pièces comprimées de plus grandes dimensions sont préparées avec une granulométrie de 15 à 20 mm.

6. Procédé selon l'une des revendications 1 à 5, caractérisé en ce que les pièces comprimées de petites dimensions déchargées de la grille mobile et séparées par tamisage sont fragmentées jusqu'à une granulométrie du produit de récupération inférieure à 0,5 mm.

7. Procédé selon l'une des revendications 1 à 6, caractérisé en ce qu'une fraction ayant une granulométrie de 8 à 12 mm est séparée par tamisage et est recyclée pour servir de garnissage de grille.
